# EUROPEAN PATENT APPLICATION

(11) **EP 1 081 899 A2**
(43) Date of publication of application: **07.03.2001**
(21) Application number: 00112850.3
(22) Date of filing: 17.06.2000
(51) Int. Cl.: H04L 12/56, H04L 12/24

(54) **Method of configurating an OSPF interface**

(30) Priority: 06.08.1999 EP 99115544
(71) Applicant: International Business Machines Corporation, Armonk, NY 10504 (US)
(72) Inventor: Frelechoux, Laurent, 8800 Thalwil (CH); Haas, Robert, 8134 Adliswil (CH); Stokes, Olen, Morrisville, NC 27560 (US)
(74) Representative: Williams, Julian David

(57) **Abstract**

A method of configuring an OSPF interface in a network router (10, 10c) is provided. The method comprises: on connection of the router (10, 10c) in a network (1, 2b) running OSPF, automatically obtaining from the network (1, 2b) data indicative of the OSPF area of the OSPF interface of an existing network router (4a, 10b); and using said data to automatically configure an OSPF interface with said OSPF area in the newly-connected router (10, 10c). Corresponding apparatus and network systems are also provided.

## Description

This invention relates generally to OSPF (Open Shortest Path First) interfaces in network routers.

OSPF is a routing protocol which is widely used in IP (Internet Protocol) networks for routing of IP data. In a network running OSPF, routers use link-state algorithms to calculate the shortest path to a destination based on a link-state database maintained by the each router. A link-state database is essentially a collection of link-states which define the state of a router's own links and those of other routers from which link-state information has been received. The link-state database thus defines the network topography seen by a particular router and is used by the router for routing calculations. OSPF provides for a logical definition of networks where routers are assigned to OSPF areas. A router belongs to a particular OSPF area if it has an interface with that area whereby a link can be established with the router from within that area. In order to configure an interface, various setup parameters required by the OSPF protocol must be defined for the interface. These setup parameters represent a description of the interface and are used to identify the interface to other routers so that the processes specified by the OSPF protocol, such as establishment of neighbor relationships, database exchange, distribution of link-state updates etc., can be performed. Various setup parameters may be defined in an interface, but in general an interface must be configured with at least an IP address, a subnet (defined by a prefix portion of the IP address) and an OSPF area to identify the interface to other routers. An interface is therefore configured manually by the network manager who sets up the network and, based on knowledge of the network configuration, inputs the OSPF area and the IP address, with appropriate subnet prefix, for configuring the interface in a router being installed in the network.

According to one aspect of the present invention there is provided a method of configuring an OSPF interface in a network router, the method comprising:
on connection of the router in a network running OSPF, automatically obtaining from the network data indicative of the OSPF area of the OSPF interface of an existing network router; and
using said data to automatically configure an OSPF interface with said OSPF area in the newly-connected router.

In accordance with the present invention, therefore, when a router is connected in a network running OSPF, the router automatically obtains from the network the OSPF area with which an existing network router, ie. a router already connected in the network, is configured. The router then uses this OSPF area to configure its own interface with that OSPF area, so that manual input of the OSPF area by the network manager is not required.

Where appropriate depending on the nature of the network, the IP address of the interface, with appropriate subnet prefix, may be preconfigured so that only the OSPF area is required for configuration of the interface. Once this has been obtained from the network, the usual setup processes specified by OSPF for identifying neighbors and creating a link-state database, etc. can thus proceed. Preferably, however, an IP address for the interface is generated automatically on connection of the router in the network. This may be done, for example, using a known system such as DHCP (Dynamic Host Configuration Protocol) which provides a mechanism for allocating IP addresses dynamically so that they can be reused when hosts no longer need them. If such a system is supported by the network, in this case the router may include appropriate control logic to request the network server managing address allocation to assign an available IP address. The received IP address, together with the OSPF area obtained from the network, can then be used for configuration of the OSPF interface. The subnet mask, indicating the portion of the IP address identifying the subnet, must also be indicated by the server or preconfigured in the router in this case, and, to avoid complication of the system, the subnet should ideally be the same as that of the interface of the existing network router from which the OSPF area is obtained. To avoid these complications, and for greater flexibility of operation, it is preferred that the IP address for the newly-connected router is generated by obtaining from the network data indicative of the subnet prefix of the OSPF interface of said existing router, and adding a predetermined postfix to said subnet prefix. Here, therefore, the router can simply be preconfigured with a unique IP postfix, and, by adding this postfix to the subnet prefix of the existing router's interface, a unique IP address in the correct subnet is obtained for configuration of the OSPF interface in the newly-connected router.

The data required for configuration of the OSPF interface can be obtained from the network in various ways depending on the nature of the particular network. In the case of a broadcast network, for example, the data can be obtained by receiving multicast OSPF hello packets from the network. The newly-connected router can listen on the IP multicast address (AllOSPFRouters) and extract the data it needs for configuration of its interface from a received hello packet. At present, a router connected in a broadcast network with an OSPF interface configured for a particular area would generally accept only those hello packets with an area id corresponding to that area. In a router embodying the present invention for use in this situation, the control logic of the router is simply adapted such that, for the purpose of interface configuration on connection in the network, the router will accept a hello packet corresponding to any OSPF area. The control logic then uses the area from a received hello packet to configure an interface with that area as described above, and thereafter operates as usual. Suitable modifications to the usual router control logic to effect this will be apparent to those skilled in the art.

A particular example of a non-broadcast network in which the present invention can be applied is a PNNI network. PNNI (Private Network-to-Network Interface) is a hierarchical, dynamic link-state routing protocol defined by the ATM (Asynchronous Transfer Mode) Forum for use in ATM networks. ATM networks can be used to carry IP traffic by employing an extension to the PNNI protocol known as PAR (PNNI Augmented Routing). PAR is described, for example in "PNNI Augmented Routing (PAR)", af-ra-0104.000, ATM Forum, January 1999. Briefly, PAR allows IP data, which is not related to operation of the ATM network in itself, to be distributed over the network. In PNNI networks, topology information is distributed in the network by flooding of PTSE's (PNNI Topology State Elements). PAR makes use of these PTSE's to distribute IP-related information in addition to the ATM topology information. PAR-enabled devices in the network encapsulate IP-related information in PTSE's which are then distributed in the usual PNNI way. The IP information in these "PAR PTSE's" is opaque to PNNI nodes that are not PAR-enabled, but other PAR-enabled nodes are aware of the format of the IP data in PAR PTSE's. Thus, for example, a PAR-enabled device in the network can communicate the usual OSPF information over the network by means of PAR-PTSE's, and another PAR-enabled device can extract the OSPF information, whereby OSPF can be implemented in the PNNI network. Thus, in an embodiment of the invention where the network is a PNNI network including one or more PAR-enabled devices for communication of OSPF information by means of PAR PTSE's, the newly-connected router may be a PAR-enabled router, wherein the data required for configuration of the OSPF interface in the router can be obtained from the network by receiving a PAR PTSE from the network and extracting said data therefrom. On connection of the PAR-enabled router in the PNNI network, PTSE's will be received from the network in accordance with the usual processes defined by PNNI for distribution of topology elements, whereby OSPF information contained in PAR PTSE's will be communicated to the PAR-enabled router.

While a router may be a PAR-enabled device as just described, in most circumstances it will be preferable for the router itself not to have to participate in PNNI. This can be achieved by employing a further extension of the PNNI protocol known as Proxy-PAR. Proxy-PAR is also described in "PNNI Augmented Routing (PAR)", af-ra-0104.000, ATM Forum, January 1999, mentioned above. Briefly, Proxy-PAR is a simple exchange protocol which allows the integration of IP devices into ATM networks without the need for the IP devices to run PNNI at all. An IP device can be connected to the network via a PAR-enabled device which is configured as a Proxy-PAR server, ie. which includes control logic for implementing the Proxy-PAR server functions defined by the Proxy-PAR protocol. The IP device itself is configured as a Proxy-PAR client, including control logic for implementing the Proxy-PAR client operations defined by Proxy-PAR. In accordance with Proxy-PAR, the Proxy-PAR client can register details of the IP services it supports with the Proxy-PAR server. This information is then encapsulated in PAR PTSE's as previously described and flooded in the network in the usual PNNI way. The Proxy-PAR client can also request the Proxy-PAR server for information on other IP devices connected in the network for which PAR PTSE's have been received by the PAR-enabled device as previously described. In this way, IP-information is communicated to and from the IP device without the device participating in PNNI. Thus, in an embodiment of the present invention where the network is a PNNI network including one or more PAR-enabled devices for communication of OSPF information over the network by means of PAR PTSE's, the newly-connected router may be configured as a Proxy-PAR client. In this case the method includes the steps of connecting the router to the network via a PAR-enabled device which is configured as a Proxy-PAR server, and obtaining said data from the network by receiving a said PAR PTSE in the PAR-enabled device configured as a Proxy-PAR server, extracting said data from the PAR PTSE and communicating the data from the Proxy-PAR server to the Proxy-PAR client.

It will be appreciated that, in general, the router for which an OSPF interface is to be configured may be connected to the network by a direct or indirect connection. Moreover, the connection itself may be a hardwired connection or a wireless link.

While auto-configuration of OSPF interfaces in accordance with the invention is advantageous in many network systems, the invention can be applied to particular advantage in the mobile environment. The router to be configured may be a mobile router of a mobile network which is connectable to any one of a plurality of access point nodes of one or more other networks. The or each other network may be a fixed or mobile network. For example, the mobile network may be connectable to any one of a plurality of access point nodes of a fixed network. Where the router to be configured is a mobile router, configuration of an OSPF interface with a new OSPF area may be required each time the mobile network moves from one access point to another, so that manual interface configuration is particularly inconvenient in this case.

It is to be appreciated that, in general, where features are described herein in accordance with a method embodying the invention, corresponding features may be provided in an apparatus embodying the invention, and vice versa. In particular, a further aspect of the present invention provides apparatus for configuring an OSPF interface in a network router, the apparatus comprising control logic which is adapted, on connection of the router in a network running OSPF, to automatically obtain from the network data indicative of the OSPF area of the OSPF interface of an existing network router, and to use said data to automatically configure an OSPF interface with said OSPF area in the newly-connected router.

Another aspect of the present invention provides a network system comprising:
a first network including at least one network router having an OSPF interface, and at least one access point node for connection of a mobile network to the first network; and
at least one mobile network, the mobile network including a mobile router comprising apparatus as hereinbefore described.

Where the router to be configured is connected to a network having existing routers with interfaces with more than one OSPF area, then a mechanism is preferably employed to control which particular area will be adopted for configuration of the interface in the newly-connected router. Various mechanisms can be envisaged for this purpose depending on the nature of the network and the requirements of the particular system being implemented. Most conveniently, however, this mechanism is provided by appropriate configuration of the network to which the router is to be connected. For example, the network may be a fixed network including a plurality of fixed network routers having OSPF interfaces with respective OSPF areas and a plurality of access point nodes for connection of a mobile network to the fixed network. In this case, each access point node is preferably associated with a respective fixed network router such that, on connection of the mobile network to a said access point node, data indicative of the OSPF area of the OSPF interface of the fixed network router associated with that access point node is obtained by the control logic of the mobile router for configuration of an OSPF interface with that area in the mobile router. The association between an access point node and a fixed network router (or group of routers) with a particular OSPF area ensures that the mobile network only receives details of one OSPF area. This association can be effected by appropriate design of the network so that the access point node only communicates the details of its associated router's interface to a mobile network connected to that node. A particular example of this will be described in detail below for the case of a PNNI network, where the association of an access point node and a fixed network router with a particular OSPF area is effected by appropriate configuration of the PNNI hierarchy and the use of a scope to limit Proxy-PAR advertisements to a particular level.

Preferred embodiments of the invention will now be described, by way of example, with reference to the accompanying drawings in which:
Figure 1 illustrates an example of a network system embodying the invention;
Figure 2 shows one view of the IP network configuration in a system of the type shown in Figure 1;
Figure 3 shows another view of the IP network configuration in a system of the type shown in Figure 1;
Figure 4 illustrates the PNNI hierarchy and Proxy-PAR advertisement scheme in the network system embodying the invention; and
Figures 5a to 5d illustrate different scenarios in operation of the network system.

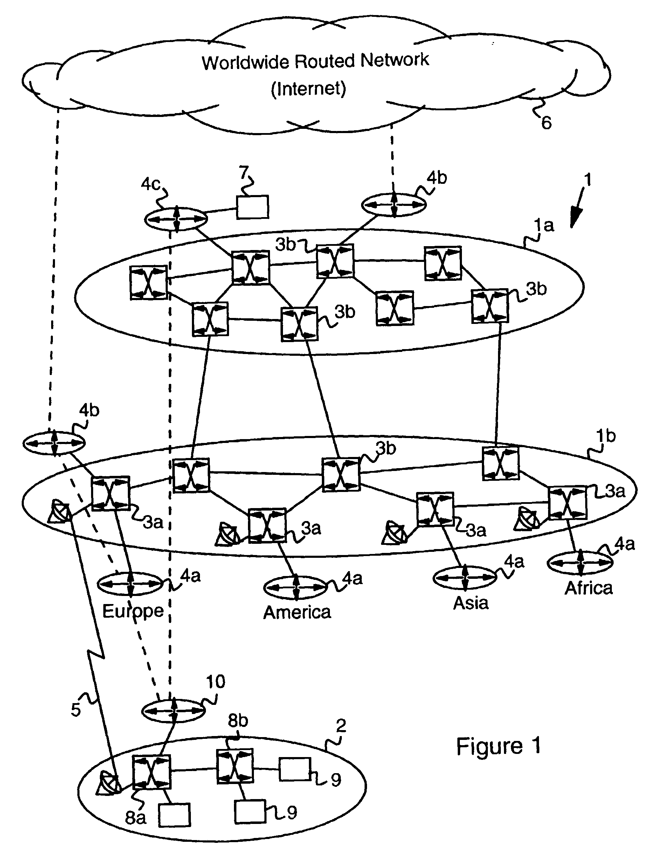

Figure 1 is a schematic overview of one example of a network system embodying the invention. The system comprises a fixed network 1 consisting of a backbone network 1a, for example a corporation network, and an access point provider network (APPN) 1b which provides fixed network access to one or more mobile networks of the system. A single mobile network 2 is shown in the figure for simplicity. The fixed network 1 in this example comprises an infrastructure of ATM switches 3a and 3b populated with IP routers 4a, 4b and 4c. The backbone network 1a is connected either ATM-wise or through IP routers to the APPN 1b. The switches labeled 3a in the figure constitute access point nodes of the APPN 1b and are located throughout the world. A mobile network 2 can be connected to any one of these access point nodes 3a via satellite links as indicated schematically at 5. The routers labeled 4a are edge routers of the APPN 1b and are distributed geographically, edge routers 4a being located in Europe, America, Asia and Africa in this example. Each edge router 4a is located in the vicinity of one or more access point nodes 3a. Edge routers 4b are gateway routers which connect the fixed network 1 to the Internet as indicated schematically at 6. The router labeled 4c is a home router connected to a home server 7 in the backbone network 1a. The home server 7 provides services to one or more mobile networks 2 in the system. The mobile network 2 includes one or more ATM switches, two switches 8a and 8b being shown in this example, connected to various end systems 9. The switch 8a here is connectable to an access point node 3a by the wireless link 5. The mobile network 2 also has at least one mobile edge router, a single mobile edge router 10 being shown in this example connected to the switch 8a.

In the situation illustrated, the mobile router 10 of the mobile network 2 is connected to the fixed network 1 via switch 8a. As will be described in more detail below, the mobile router 10 has automatically configured an OSPF interface with the OSPF area of the European APPN edge router 4a. Thus, IP traffic (indicated by the broken lines in the figure) from the mobile network 2 is sent by mobile router 10 to the European edge router 4a. From there, IP traffic destined for the Internet is routed to the closest Internet gateway router 4b. IP traffic destined for the home server 7 of the mobile network is forwarded to the home router 4c in the backbone network and from there to the server 7. Alternatively, the mobile router 10 may have a preconfigured OSPF interface with the OSPF area of its home router 4c. In this case, IP traffic from the mobile network destined for the backbone network is sent to the home router 7 via this preconfigured interface (as indicated in the figure by the broken line linking mobile router 10 and home router 4c), whereas IP traffic for the Internet is forwarded to European edge router 4a via the auto-configured OSPF interface as previously described.

The mobile network system illustrated in this example uses ATM as the transport layer for communication between mobile platforms 2 through sites in the worldwide APPN 1b to the backbone network 1a. The APPN and the mobile networks are aware of, and capable of adapting to, mobility at the ATM layer. The IP layer described further below takes full advantage of the PNNI mobility support provided by the ATM layer, so that, except for the automatic configuration of OSPF interfaces discussed further below, the IP layer is unaware of mobility and operates as in a fixed network system. The PNNI mobility support provided by the ATM layer system may be as described, for example, in the following White Papers to which reference is made for further information: "IBM Mobile ATM Networking Technology Overview v2.0", IBM Research Laboratory, August 1998; and "IBM Mobile ATM Networking, Network Design and Addressing Considerations v2.0", IBM Research Laboratory, January 1999. Reference is also made in this regard to "PNNI Addendum for Mobility Extensions v1.0", af-ra-0123.000. The details of the mobility support at the ATM layer are not central to the present invention and need not be discussed in detail here. Suffice to say that the ATM layer can reroute point-to-point SVC's (Switched Virtual Connections), including router-to-router SVC's used to transport IP packets between two routers, as the network structure changes when mobile networks move between access points. Handover of connections is triggered automatically when a mobile network is about to lose a satellite or line-of-sight link, the connections being rerouted to a secondary link if one is available.

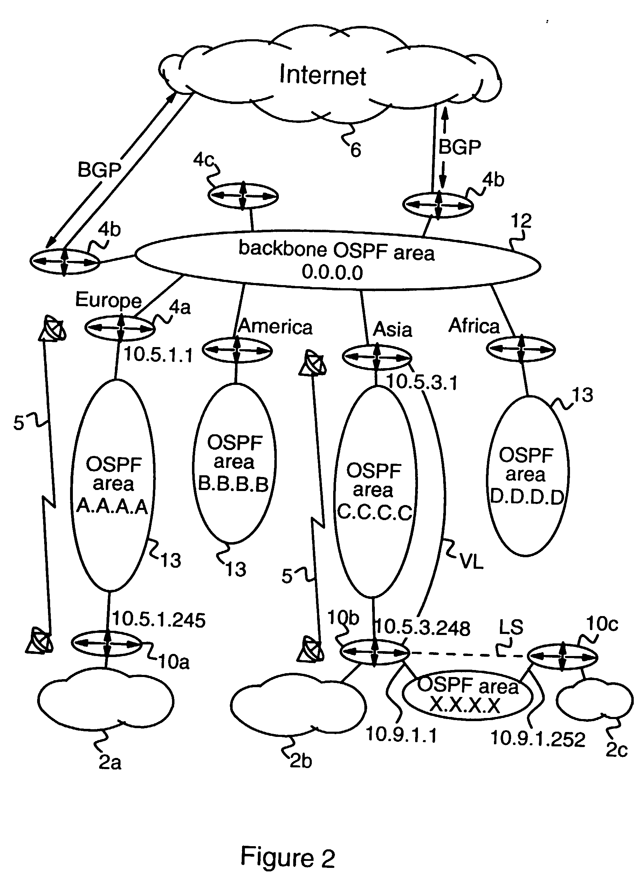

Figure 2 illustrates an example of the IP network topology for a network system as described above. In this example, the backbone network and APPN of the fixed network 1 are integrated into the same IP network running OSPF as a single autonomous system. Thus, as shown in the figure, the APPN edge routers 4a, gateway routers 4b and home routers 4c have OSPF interfaces into the backbone OSPF area (0.0.0.0), labeled 12 in the figure. The gateway routers 4b exchange IP routing information with other autonomous systems of the Internet 6 using, for example, BGP (Border Gateway Protocol) sessions. In addition, each APPN edge router 4a has an OSPF interface configured with its own OSPF area 13. These OSPF areas 13 are used by the edge routers of mobile networks 2 when connected to the access point node associated with a particular APPN edge router 4a.

Three mobile networks 2a, 2b and 2c are shown in this figure. The mobile network 2a is shown connected via a satellite link 5 to the access point node associated with the European APPN edge router. As a result of this connection, the mobile edge router 10a has automatically configured an OSPF interface with the OSPF area 13 of the European edge router. The mobile edge router 10 includes control logic (not shown separately) for automatically obtaining from the network the data required to configure this interface when the mobile network makes a connection with an APPN access node. The required data is obtained from the network using the PAR and Proxy-PAR protocols, and this will be described further below. Once the control logic has received the data, the control logic processes the data as described below to obtain the setup data required to configure the interface, and automatically supplies this setup data to the interface control circuitry for use in the subsequent processes specified by OSPF. Thus, once the interface has been configured with the setup data, the interface operates in the same way as if the setup data had been input manually by a network manager, and the standard processes specified by OSPF, such as establishing neighbor relationships and setting up a link-state database etc., can then be implemented in the same way as in a manually configured interface. The control logic for automatically configuring the interface can be implemented in hardware or software, or a combination thereof, and is conveniently integrated with the processor controlling operation of the router as a whole. Suitable implementations of the control logic will be readily apparent to those skilled in the art from the description herein.

In the present embodiment, the particular data which the control logic obtains from the network on connection of the mobile network to the APPN consists of the IP address of the APPN edge router 4a, the subnet mask which indicates the prefix portion of the IP address defining the subnet of the APPN edge router, and the OSPF area 13 of the edge router. The control logic then generates an IP address for the interface by applying the subnet mask to the received IP address to extract the subnet prefix, and adding a unique postfix to this subnet prefix. The postfix is unique to the interface and is prestored in the control logic for this purpose. The control logic thereby generates a unique IP address for the interface in the same subnet as the interface of the European edge router 4a. This IP address, together with the OSPF area of the European edge router is then supplied to the interface control circuitry as previously described. Any other setup parameters which may be required for configuration of the interface, such as the Designated Router (DR) priority and the interface type, can be preconfigured in the interface since these will not change as the mobile network moves between access points. In this regard, the DR priority will generally be set to zero to inhibit selection of the router as a Designated Router, since the mobile network is likely to move in and out of contact with the fixed network. In addition, depending on the particular network, the subnet mask, or even the IP address in some cases, may be preconfigured in the interface, though the present example provides greater flexibility in operation.

Returning to Figure 2, the European edge router 4a has an interface with OSPF area A.A.A.A and IP address 10.5.1.1, subnet prefix 10.5.1. Thus, on connection to the APPN as described above, the router 10a of mobile network 2a automatically configures an OSPF interface with OSPF area A.A.A.A and IP address 10.5.1.245, where 245 is the unique identifying postfix for the interface. The second mobile network 2b, with mobile edge router 10b, is connected via satellite link 5 to the APPN access point node associated with the Asian edge router 4a. The Asian edge router has an OSPF interface configured with OSPF area C.C.C.C and IP address 10.5.3.1, subnet prefix 10.5.3. Thus, on establishment of the satellite link, the mobile router 10b automatically configures an OSPF interface with area C.C.C.C and IP address 10.5.3.248, where 248 is the unique postfix for this interface. The mobile ATM system also supports line-of-sight links between certain mobile networks whether or not there is connectivity to the fixed network. In the example illustrated, large mobile network 2b provides support for a line-of-sight link and is shown connected by this link LS to small mobile network 2c having mobile edge router 10c. To support this link at the IP layer, mobile router 10b has an additional, preconfigured OPSF interface with area X.X.X.X and IP address 10.9.1.1, subnet prefix 10.9.1, which are unique to this network. When the link LS is established between the two mobile networks 2b and 2c, mobile router 10c automatically configures an OSPF interface with area X.X.X.X and IP address 10.9.1.252, where 252 is the unique postfix in this case, the necessary data being obtained as previously described though in this case from mobile network 2b. To be able to route from the "guest node" OSPF area X.X.X.X to the fixed network 1, the mobile router 10b creates an OSPF virtual link VL to the Asian edge router 4a. This virtual link VL is created in known manner in accordance with the OSPF protocol to connect the guest node area X.X.X.X to the backbone OSPF area 0.0.0.0.

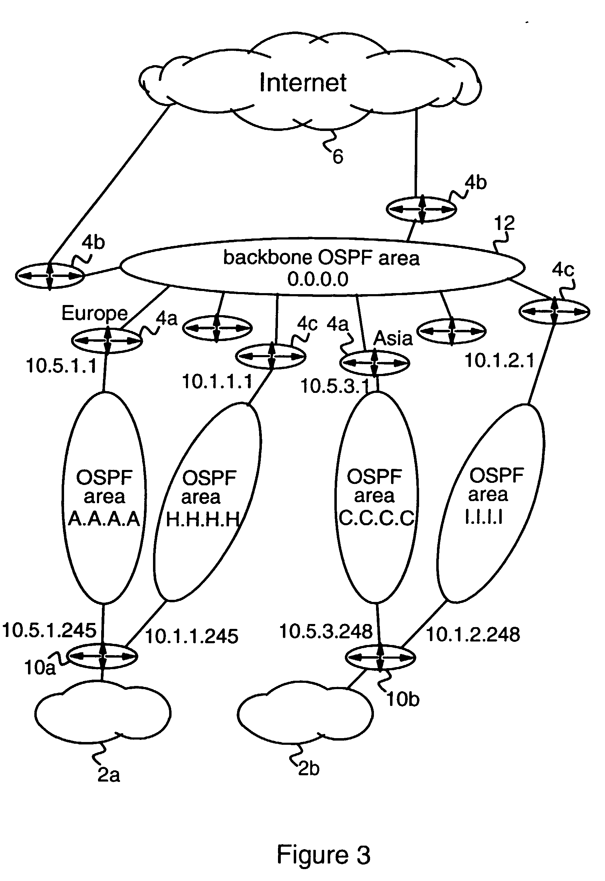

Figure 2 just described illustrates the IP network topology for the "dynamic IP configuration" where all IP traffic from a mobile network, whether destined for the Internet or the mobile network's home router 4c, is routed via the mobile router's self-configured OSPF interface with the OSPF area of the APPN edge router 4a. The dynamic configuration can be combined with the "static IP configuration" touched on earlier, in which the mobile router has a preconfigured OSPF interface with its home router's OSPF area. In this case, IP traffic from the mobile network destined for the Internet is routed via the self-configured interface as before, but IP traffic destined for the home router 4c is routed via the preconfigured interface. Figure 3 shows an example of the IP topology in this case, where two mobile networks 2a and 2b are connected as in Figure 2, and each mobile network has a home router 4c. As illustrated, the home router 4c for mobile network 2a has an interface with area H.H.H.H and IP address 10.1.1.1. The mobile router 2a has a preconfigured interface with area H.H.H.H and IP address 10.1.1.245. Similarly, the home router 4c for mobile network 2b has an interface with area I.I.I.I and IP address 10.1.2.1, and the mobile router 10b has a preconfigured interface with area I.I.I.I and IP address 10.1.2.248. This combined static and dynamic IP configuration allows optimal routing of IP traffic, with home servers providing centralized services that are not geographically distributed, and the geographically distributed APPN gateway routers providing Internet access for IP Internet traffic.

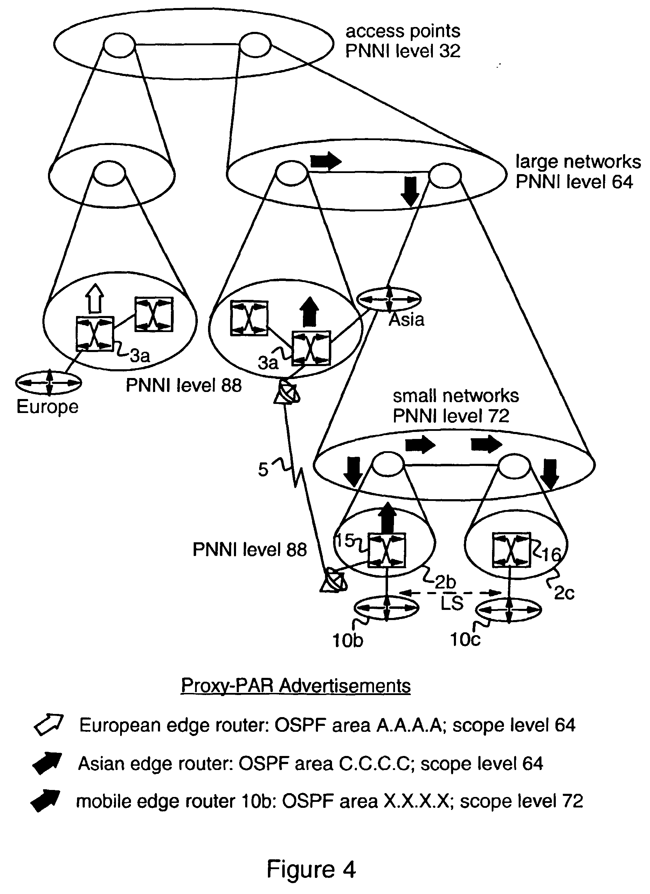

The mechanism by which mobile routers obtain the data necessary for automatic configuration of OSPF interfaces will now be described with reference to Figure 4. This figure illustrates schematically the PNNI hierarchy and Proxy-PAR advertisement scheme in relation to the main elements of a network system as described above. At the lowest level of the PNNI hierarchy, level 88 in this example, the European and Asian APPN edge routers 4a are shown, each connected to an APPN access point node 3a. Each node 3a, together with one or more other APPN nodes which may or may not be access point nodes, forms a PNNI peer group in level 88. The peer groups are indicated by the ellipses in the figure, and in this case only one additional APPN node is shown in each peer group for simplicity. As illustrated, the peer groups are defined here such that there is only one APPN edge router in each peer group.

Large mobile network 2b is shown connected via satellite link 5 to access point node 3a for the Asian edge router. This mobile network, represented for simplicity by a single ATM switch 15 and mobile router 10b forms a peer group at the lowest level, level 88, of the PNNI hierarchy. Similarly, small mobile network 2c, represented by switch 16 and mobile router 10c, forms another peer group in level 88. Small mobile network 2c is connected via line-of-sight link LS to large mobile network 2b.

The large and small mobile networks 2b and 2c are represented by logical group nodes (LGN's) which form a peer group at a higher level, here level 72, of the PNNI hierarchy. This level is therefore the level at which a logical connection exists in the PNNI hierarchy between a large mobile network and a small mobile network connected as a guest node to the large network, and thus the level at which such small, or guest, networks can integrate the hierarchy of the large mobile network. Level 72 is therefore labeled as the "small networks" level. When a mobile network, with or without a linked guest network, is connected to the APPN, then the large network's peer group at level 72 is represented by a LGN which shares a peer group with the LGN representing its APPN access point node at a higher level, here level 64, of the PNNI hierarchy. Level 64 is therefore the level at which a logical connection exists between a large mobile network connected to an APPN access point node and the access point node to which it is connected. At this level, therefore, the large mobile network can integrate the hierarchy of the APPN, so the level is labeled as the "large networks" level in the figure. It will be seen from the figure that the level 64 peer groups contain only one APPN edge router, there being no logical connection between the access point nodes associated with different routers at this level. The access point nodes are logically connected at a still higher level, here level 32 (the "access points" level) of the PNNI hierarchy.

As discussed earlier, IP routing information is communicated over the network system using PAR and Proxy-PAR. The APPN access point node 3a to which an APPN edge router 4a is connected is a PAR enabled switch running a Proxy-PAR server. Each APPN edge router 4a runs a Proxy-PAR client. In accordance with Proxy-PAR, an APPN edge router registers its services with the Proxy-PAR server. The information registered here includes the router's IP address, subnet mask, OSPF area and Designated Router priority. This information is encapsulated in PAR PTSE's by the PAR-enabled switch and is advertised in the PNNI network in the usual way. However, when registering its details, the router also indicates a scope for advertisement of these details. In the present case, the scope corresponds to PNNI level 64. Thus, as indicated in the figure, Proxy-PAR advertisements for the APPN edge router OSPF interfaces are advertised by the PAR-enabled switches up to level 64, ie. the large platforms level. There is no Proxy-PAR advertisement at the access points level, level 32. Thus, the advertisement relating to one APPN edge router will not be received by the PAR-enabled device serving another APPN edge router. However, when a mobile network, such as network 2b, is connected to the APPN, it will receive the Proxy-PAR advertisement for the APPN edge router associated with the APPN access point. Thus, as indicated in the figure, the mobile network 2b will receive the Proxy-PAR advertisement with details of the OSPF interface of the Asian edge router.

The switch 15 in the mobile network 2b is also a PAR-enabled device and runs a Proxy-PAR server. The mobile router 10b runs a Proxy-PAR client and, in accordance with Proxy-PAR, can query its Proxy-PAR server for server for details of other IP routers. Thus when the satellite link 5 is established, the Proxy-PAR control logic of mobile router 10b issues a request to the server for details of OSPF interfaces in any subnet (IP address 0.0.0.0). The server in switch 15 therefore responds with the details of the OSPF interface of the Asian edge router, and the mobile router 10b then automatically configures an OSPF interface with the appropriate OSPF area as previously described. After configuration of the interface, the mobile router can then set up a neighbor relationship with the Asian edge router, the necessary IP information being encapsulated in ATM packets in the usual way.

In the mobile router 10b, the preconfigured OSPF interface with area X.X.X.X for guest node connectivity is registered with the Proxy-PAR server in switch 15 by the Proxy-PAR client logic of the mobile router. This is registered with a scope corresponding to level 72, the small platforms level. Thus, the Proxy-PAR advertisement for this interface will be advertised up to level 72 where it will be received by the PAR-enabled switch 16 in small network 2c on establishment of the line-of-sight link LS. The switch 16 runs a Proxy-PAR server for Proxy-PAR client logic in mobile router 10c. Thus, in the same way as just described, the mobile router 10c will receive details of the guest node interface in mobile router 10b, will automatically configure an OSPF interface with area X.X.X.X, and will establish a neighbor relationship with the guest node interface in router 10b. It will be noted that, as indicated in the figure, the mobile router 10c of the small network 2c receives the advertisements for the services of both the large mobile platform's router and the Asian edge router. However, the control logic in the mobile router 10c is configured to accept only the services with the lowest scope.

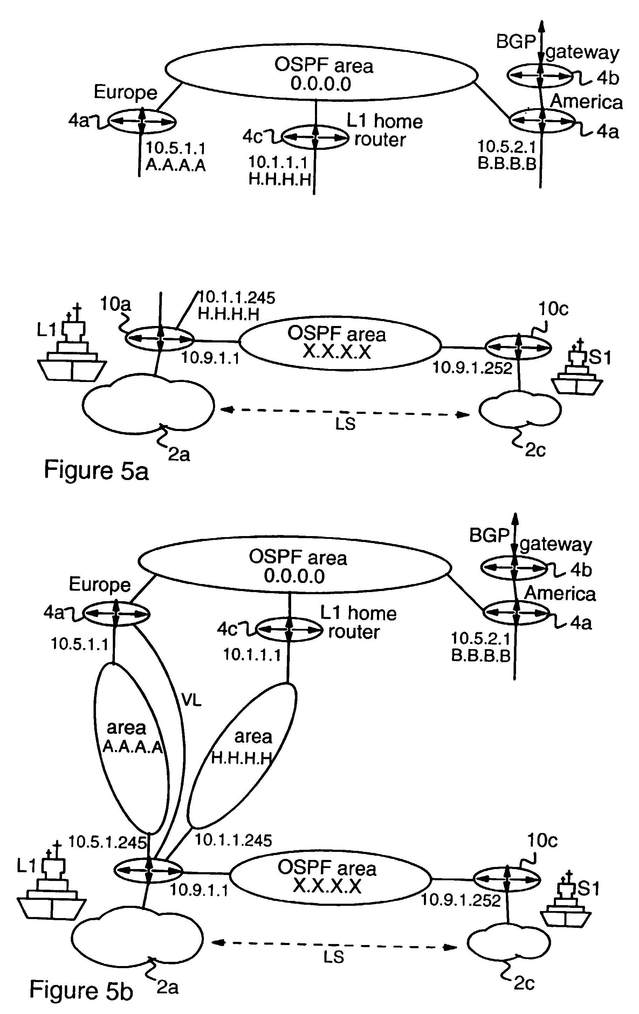

Figures 5a to 5d show examples of different scenarios in operation of the network system described above. In each case, only a subset of the network elements are shown for simplicity. Figure 5a illustrates a command ship L1, with mobile network 2a on board, cruising in the Atlantic ocean. The smaller ship S1, with mobile network 2c on board, is cruising in the same fleet and maintains a laser line-of-sight link LS with command ship L1. The router 10c on S1 has configured an interface with area X.X.X.X and has exchanged routing information with router 10a on L1 using OSPF. IP traffic can then be communicated between hosts on board S1 and L1. There is no connectivity to the fixed network infrastructure, and the ships L1 and S1 form a stand-alone network. In Figure 5b, the fleet has moved such that L1 enters into the coverage area of the satellite associated with the European edge router. Once the satellite link is established and ATM connectivity is available, the mobile edge router 10a of L1 activates its preconfigured interface running OSPF in area H.H.H.H and establishes a neighbor relationship with its home router 4c. At the same time, router 10a learns via Proxy-PAR of the existence on the European edge router of an IP interface running OSPF in area A.A.A.A, and automatically configures an interface with this area. It also creates an OSPF virtual link VL linking the existing OSPF area X.X.X.X to the backbone OSPF area 0.0.0.0. IP packets can now be forwarded from hosts on S1 to the router on L1 which forwards them either to the home router of L1 via its interface with OSPF area H.H.H.H, or to the APPN European edge router via the newly configured interface with area A.A.A.A. IP traffic for servers in the home network is forwarded to the home router, while other IP packets are routed to the European edge router. IP traffic from the fixed network is forwarded either through the European edge router interface with area A.A.A.A, or through the L1 home router's interface with area H.H.H.H, depending on where the traffic is generated.

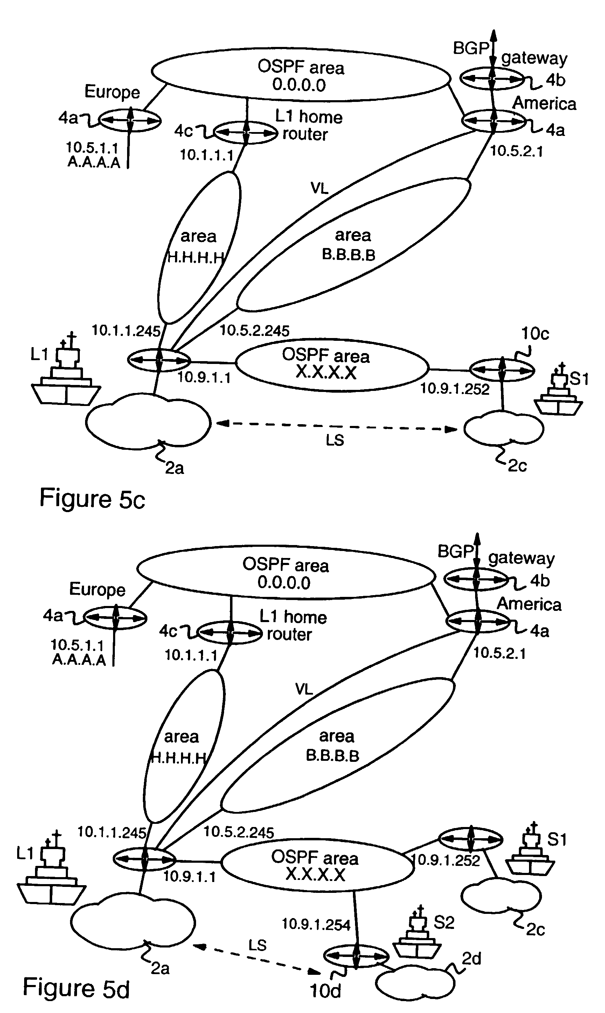

In Figure 5c, the satellite link between L1 and the European access point has faded as the fleet moves and handover to the American satellite link becomes necessary. Once the new link is up and ATM connectivity established, all the ATM connections on the fading satellite are automatically rerouted by the ATM layer. This includes the point-to-point SVC's between the mobile router 10a of L1 and the European edge router. When the control logic of router 10a detects the change in the Proxy-PAR information delivered by its serving switch in response to the Proxy-PAR client's periodic requests for IP information, the control logic automatically configures an OSPF interface with a new IP address and the OSPF area B.B.B.B of the American APPN edge router as indicated. The router 10a also creates a virtual link VL to the new APPN edge router, linking area X.X.X.X to the backbone area. The control logic of the mobile router then removes the interface with the European edge router, and from then on IP traffic targeted to the APPN is routed via the new interface to the American edge router.

Figure 5d shows the same situation as Figure 5c except that ship S2, with small mobile network 2d on board, has joined the fleet. On establishing a line-of sight link LS with L1, the mobile edge router 10d of S2 configures an OSPF interface with area X.X.X.X in the same way as previously described for S1.

It will be seen from the above that the automatic configuration of OSPF interfaces in embodiments of the invention provides significant advantages, allowing highly efficient operation of mobile network systems in particular. However, it will be appreciated that embodiments of the invention can also be applied to advantage in fixed network systems, avoiding the need for manual interface configuration as is required at present. It will also be appreciated that, while preferred embodiments have been described in detail above, many changes and modifications can be made to the embodiments described without departing from the scope of the invention. By way of example, in the network system described above, the APPN and backbone ATM networks are integrated in the IP layer, running OSPF as a single autonomous system (AS). In another IP configuration, the corporation (backbone ATM) network and the APPN are two distinct networks in the IP layer, running different instances of OSPF as respective autonomous systems. In this case, the two systems exchange IP routing information using an inter-AS routing protocol such as BGP. In addition, where a mobile router has a preconfigured interface with a home router in the corporation network (static IP configuration), internal BGP sessions in the router are used to bridge between this OSPF system and the OSPF system of the automatically-configured interface with the APPN as will be apparent to those skilled in the art.

As a further example, while a non-broadcast system has been described in detail above, the invention can also be applied to a broadcast system. In this case for example, a mobile router of a mobile network may be connectable via satellite links to a plurality of access point nodes of one or more other (fixed or mobile) broadcast networks. When a satellite link is established, the mobile router obtains the data for configuring an interface with the appropriate OSPF area by listening on the IP multicast address (AllOSPFRouters) as previously described. Each access point node may be associated with a router (or group of routers) having an interface with a single OSPF area for use by the mobile router when connected to that access point node. That is, the network may be configured such that when the mobile router is connected to an access point node, the mobile router will receive multicast OSPF hello packets relating only to that one OSPF area for use by mobile networks, and not those of other routers associated with other access points. To deal with situations where the mobile network is within satellite range of more than one access point, the mobile network preferably includes means for selecting one particular satellite link for use by the mobile router. For example, the network may include logic for assessing the relative strength of signals received via the active satellite links, and supplying only signals from the link with the highest signal strength to the mobile router. This ensures that the mobile router receives multicast OSPF hello packets relating to only a single OSPF area with which an OSPF interface should be configured in the mobile router.

## Claims

1. A method of configuring an OSPF interface in a network router (10, 10c), the method comprising:
on connection of the router (10, 10c) in a network (1, 2b) running OSPF, automatically obtaining from the network (1, 2b) data indicative of the OSPF area of the OSPF interface of an existing network router (4a, 10b); and
using said data to automatically configure an OSPF interface with said OSPF area in the newly-connected router (10, 10c).

2. A method as claimed in claim 1 including automatically generating an IP address for use in configuration of the OSPF interface in the newly-connected router (10, 10c).

3. A method as claimed in claim 2 including automatically obtaining from the network (1, 2b) data indicative of the subnet prefix of the OSPF interface of said existing router (4a, 10b), and generating said IP address for the OSPF interface of the newly-connected router (10, 10c) by adding a predetermined postfix to said subnet prefix.

4. A method as claimed in any preceding claim wherein said network is a broadcast network, the method including obtaining said data from the network by receiving a multicast OSPF hello packet from the network and extracting said data therefrom.

5. A method as claimed in any one of claims 1 to 3 wherein said network (1, 2b) is a PNNI network including one or more PAR-enabled devices (3a, 15) for communication of OSPF information over the network by means of PAR PTSE's, and wherein the newly-connected router (10, 10c) is a PAR-enabled router, the method including obtaining said data from the network by receiving a said PAR PTSE from the network and extracting said data therefrom.

6. A method as claimed in any one of claims 1 to 3 wherein said network (1, 2b) is a PNNI network including one or more PAR-enabled devices (3a, 15) for communication of OSPF information over the network by means of PAR PTSE's, and wherein the newly-connected router (10, 10c) is configured as a Proxy-PAR client, the method including connecting the router (10, 10c) to the network via a PAR-enabled device (8a, 16) which is configured as a Proxy-PAR server, and obtaining said data from the network by receiving a said PAR PTSE in the PAR-enabled device configured as a Proxy-PAR server, extracting said data from the PAR PTSE and communicating the data from the Proxy-PAR server to the Proxy-PAR client.

7. A method as claimed in any preceding claim including connecting the router (10, 10c) to said network (1, 2b) via a wireless link (5, LS).

8. A method as claimed in any preceding claim wherein the newly-connected router is a mobile router (10) of a mobile network (2) which is connectable to any one of a plurality of access point nodes (3a) of a fixed network (1).

9. Apparatus for configuring an OSPF interface in a network router (10, 10c), the apparatus comprising control logic which is adapted, on connection of the router (10, 10c) in a network (1, 2b) running OSPF, to automatically obtain from the network (1, 2b) data indicative of the OSPF area of the OSPF interface of an existing network router (4a, 10b), and to use said data to automatically configure an OSPF interface with said OSPF area in the newly-connected router (10, 10c).

10. Apparatus as claimed in claim 9 wherein the control logic is adapted to automatically obtain from the network (1, 2b) data indicative of the subnet prefix of the OSPF interface of said existing router (4a, 10b), and to generate an IP address for use in configuration of the OSPF interface of the newly-connected router (10, 10c) by adding a predetermined postfix to said subnet prefix.

11. Apparatus as claimed in claim 9 or claim 10 wherein said network is a broadcast network, and wherein the control logic is adapted to obtain said data from the network by receiving a multicast OSPF hello packet from the network and extracting said data therefrom.

12. Apparatus as claimed in claim 9 or claim 10 wherein said network (1, 2b) is a PNNI network including one or more PAR-enabled devices (3a, 15) for communication of OSPF information over the network by means of PAR PTSE's, and wherein the control logic includes PAR logic for receiving PAR PTSE's from the network, the control logic being adapted to extract said data from a received PAR PTSE for use in configuration of the OSPF interface in the newly-connected router (10, 10c).

13. Apparatus as claimed in claim 9 or claim 10 wherein said network (1, 2b) is a PNNI network including one or more PAR-enabled devices (3a, 15) for communication of OSPF information over the network by means of PAR PTSE's, and wherein the control logic includes Proxy-PAR client logic which is adapted, on connection of the router (10, 10c) to the network via a PAR-enabled device (8a, 16) which is configured as a Proxy-PAR server, to issue a request to the Proxy-PAR server for OSPF information contained in PAR PTSE's received by the server, whereby said data is obtained from the Proxy-PAR server in response to said request.

14. A network router (10, 10c) including apparatus as claimed in any one of claims 9 to 13.

15. A mobile network (2, 2c) which is connectable to any one of a plurality of access point nodes (3a, 15) of one or more other networks (1, 2b), the mobile network (2, 2c) including a mobile router (10, 10c) comprising apparatus as claimed in any one of claims 9 to 13.

16. A network system comprising:
a first network (1, 2b) including at least one network router (4a, 10b) having an OSPF interface, and at least one access point node (3a, 15) for connection of a mobile network (2, 2c) to the first network (1, 2b); and
at least one mobile network (2, 2c) as claimed in claim 15.

17. A network system as claimed in claim 16 wherein:
said first network is a fixed network (1) including a plurality of fixed network routers (4a) having OSPF interfaces with respective OSPF areas and a plurality of access point nodes (3a) for connection of a mobile network (2) to the fixed network (1); and
each access point node (3a) is associated with a respective fixed network router (4a) such that, on connection of the mobile network (2) to a said access point node (3a), data indicative of the OSPF area of the OSPF interface of the fixed network router (4a) associated with that access point node is obtained by the control logic of the mobile router (10) for configuration of an OSPF interface with that area in the mobile router (10).

18. A system as claimed in claim 17 wherein:
the fixed network (1) is a PNNI hierarchical network, and each of said fixed network routers (4a) is configured as a Proxy-PAR client and is connected to a respective PAR-enabled device (3a) configured as a Proxy-PAR server for advertising the OSPF interface of the connected router (4a) in the fixed network (1) by means of PAR PTSE's, the Proxy-PAR client of the fixed router (4a) defining a scope for advertisement of said OSPF interface corresponding to a predetermined level (level 64) of the PNNI hierarchy at which a logical connection is made between the access point node (3a) associated with that fixed router (4a) and a mobile network (2) connected to that access point;
the PNNI hierarchy is configured such that the access point nodes (3a) are logically connected at a level (level 32) above said predetermined level (level 64), whereby a said access point node (3a) is associated with only one of said fixed network routers (4a) through receipt of PAR PTSE's advertising the OSPF interface of that router; and
the control logic of the mobile router (10) includes Proxy-PAR client logic and the mobile network (2) includes a PAR-enabled device (8a) configured as a Proxy-PAR server for the mobile router (10), the control logic being adapted, on connection of the mobile network (2) to a said access point node (3a), to issue a request to the PAR-enabled device (8a) configured as a Proxy-PAR server for the mobile router for OSPF information contained in PAR PTSE's received by the server, whereby said data indicative of the OSPF area of the OSPF interface of the fixed network router (4a) associated with the access point node (3a) to which the mobile network (2) is connected is obtained by the control logic in response to said request.

19. A system as claimed in claim 17 or claim 18 wherein the fixed network (1) includes a home router (4c), connected to a home server (7) for the mobile network (2), having an OSPF interface with a home OSPF area, and wherein the mobile router (10) includes a preconfigured OSPF interface with said home OSPF area.

20. A system as claimed in any one of claims 16 to 19 wherein the mobile network (2, 2c) is connectable to the first network (1, 2b) via a wireless link (5, LS).

21. A system as claimed in any one of claims 16 to 20 including a plurality of said mobile networks (2a, 2b, 2c, 2d) interconnectable via wireless links (LS), wherein the mobile router (10a, 10b) of at least a first mobile network (2a, 2b) has a preconfigured OSPF interface with a guest OSPF area (X.X.X.X) for use by the mobile router (10c, 10d) of a second mobile network (2c, 2d) when the first and second mobile networks are connected, whereby, on connection of the first and second mobile networks, the control logic of the mobile router (10c, 10d) of the second mobile network (2c, 2d) automatically obtains from the first mobile network (2a, 2b) data indicative of the guest OSPF area (X.X.X.X) for configuration of an OSPF interface with the guest area.
